# EUROPEAN PATENT APPLICATION

(11) **EP 4 610 954 A1**
(43) Date of publication of application: **03.09.2025**
(21) Application number: 25160539.0
(22) Date of filing: 27.02.2025
(51) Int. Cl.: G07F 9/10, G07F 17/00

(54) **A METHOD OF DISPENSING A HEATED FOOD ITEM**

(30) Priority: 27.02.2024 GB 202402739
(71) Applicant: Samworth Brothers Ltd, Leicestershire LE13 1GA (GB)
(72) Inventor: Shea-Simmonds, Duncan, Leicester LE1 5TT (GB); Brindza-Bodnar, Adam, Leicester LE1 5TT (GB); Walter, William, Leicester LE1 5TT (GB)
(74) Representative: Serjeants LLP

(57) **Abstract**

The method of the present invention is a method of heating food suitable for a hot food vending machine (1). The method comprises the steps of positioning a food item (5) in contact with a first hot plate (21); determining an initial temperature of the first hot plate (21) and controlling the temperature of the first hot plate (21) to move from the initial temperature to a fixed cooking temperature; maintaining the temperature of the first hot plate (21) at the fixed cooking temperature for a cooking time period; and removing the food item (5) from contact with the first hot plate (21) at the expiry of the cooking time period; wherein the first hot plate (21) is moved to the fixed cooking temperature before the food item (5) is positioned in contact with the first hot plate (21). A second hot plate (22) may also be utilized and the second hot plate may be at the same or a different fixed cooking temperature.

## Description

### Field of the Invention

The present invention relates to the heating of food items for immediate consumption from hot food vending machines.

### Background to the Invention

Many takeaway food items are heated before consumption. For example, toasted sandwiches and paninis are often displayed in cafes, heated appropriately by the café, and then provided to the customer for consumption. Such items are typically manually heated in a sandwich press or a similar machine for a set period of time.

There is a desire to provide vending machines for heated takeaway food items. An example of a machine is disclosed in co-pending UK patent application GB2402738.5 filed on the 27 February 2024. This machine includes a heating area for heating food items. The heating area includes an upper hot plate and a lower hot plate. The food item is heated, in its packaging, by being compressed between the hot plates. The vending machine of UK patent application GB2402738.5 is operated to heat a food item when a user selects that food item for dispensing. There is a need for a method of controlling the heating of the food item.

Any method of heating food items for vending machines should be simple and repeatable and ensure that each food item is heated in an appropriate manner.

### Summary of the Invention

The present invention provides a method of dispensing a heated food item from a vending machine having a first hot plate and a second hot plate, the method comprising the steps of:
a user inputting a food selection into the vending machine;
the vending machine being operated to heat the food according to method wherein:
   the food item is positioned in contact with the first hot plate and the second hot plate, wherein the second hot plate opposes the first hot plate and the food item is positioned therebetween;
   determining a first initial temperature of the first hot plate and a second initial temperature of the second hot plate;
   controlling the temperature of the first hot plate to move from the first initial temperature to a first fixed cooking temperature;
   controlling the temperature of the second hot plate to move from the second initial temperature to a second fixed cooking temperature;
   maintaining the temperature of the first hot plate at the first fixed cooking temperature for a cooking time period;
   maintaining the temperature of the second hot plate at the second fixed cooking temperature for the cooking time period;
   removing the food item from contact with the first hot plate and the second hot plate at the expiry of the cooking time period; wherein
   the first hot plate is moved to the first fixed cooking temperature before the food item is positioned in contact with the first hot plate and the second hot plate is moved to the second fixed cooking temperature before the food item is positioned in contact with the second hot plate; and
   after heating, the vending machine being operated to dispense the heated food item from the vending machine.

A hot plate of the present invention may be any suitable heating plate that can be controlled to be at a specific temperature and that is suitable for heating food items. In embodiments of the invention a hot plate of the present invention may be an infrared hot plate.

The temperature of the hot plate may be controlled in any manner apparent to the apparent to the person skilled in the art. In embodiments of the invention the temperature of the hot plate may be controlling using one or more PID controllers. Each hot plate may be controlled independently by a separate controller. Alternatively, a single controller may control two or more hot plates.

The method of the present invention is advantageous in that it allows the first and second hot plates to be repeatedly and reliably controlled to heat a food item, regardless of the time period since which the hot plate was previously used. Hot plates generally have a large thermal mass, which means that they will retain heat and stay above ambient temperature for a significant time period after heating. Therefore, it is not a simple matter of heating a hot plate in the same manner each time the hot plate is operated. If a hot plate has been used recently and has significant retained heat then it will require less heating than if the hot plate has not been used for an extended period of time.

A food item used in the method of the present invention may be any food item that is suitable for heating with a heating plate. This includes, but is not limited to, paninis, toasted sandwiches, pasties, and pastry bakes. A food item may be removed from packaging for heating but is more preferably heated within suitable, heat-proof, packaging. This is preferred as removing a food item from a vending machine is a difficult operation for a vending machine to carry out mechanically, independently from human intervention. Suitable packaging will be apparent to a person skilled in the art and includes packaging made from baking paper or similar materials. As will be readily appreciated if the food item is to be heated in the packaging it is advantageous that the packaging is not damaged by heating. In order to ensure this printed areas or seals on the packaging may be positioned away from areas of the packaging intended to be in direct contact with a hot plate. For example, if the food item is toasted sandwich then labels and seals may be positioned at ends of the sandwich away from faces that will be in contact with a hot plate during heating.

If food items are heated in packaging it may be advantageous that the packaging is pierced before heating. Sealed packaging may contain trapped air or gas, which may serve to insulate the food item from heating. Different amounts of trapped air or gas may provide different levels of insulation. Therefore, to provide consistent heating it may be advantageous to pierce the packaging to release trapped air and thereby ensure consistent heating. Air may be removed from the packaging, for example, by compressing the food item using the first hot plate and the second hot plate. The packaging may be in direct contact with the first hot plate and/or the second hot plate during heating.

The cooking time period will be the period of time sufficient to appropriately heat a food item based on the temperature of the hot plate and the type of food item being heated. For example, a panini may take longer to heat than a toasted sandwich. This information will be known in the case of a vending machine, therefore the controller may determine the cooking time period based on the type of food item selected and/or the first fixed cooking temperature and the second fixed cooking temperature. The user will input a selection of a food item, the controller will receive that information, control the heating of each hot plate appropriately and determine the appropriate cooking time period for that food item and the method of the invention will then be carried out on that basis.

In embodiments of methods of the present invention pressure may be applied to the food item by the first hot plate during the cooking time period. To achieve this the first hot plate may be movable and the movement of the first hot plate may be controlled by the controller. In particular, the first hot plate may be moved towards the food item to apply pressure to the food item during heating. The first hot plate may be moved after it is controlled to be at the fixed cooking temperature. The pressure applied to a food item may be determined by the type of food item. For example, a greater pressure may be applied to a toasted sandwich than to the pastry.

A method according to the present invention includes positioning the food item in contact with a second hot plate, wherein the second hot plate opposed the first hot plate and the food item is positioned between the first hot plate and the second hot plate. The second hot plate is controlled to be at a second fixed temperature that is different from the fixed cooking temperature of the first hot plate and is maintained at the second fixed temperature for the cooking time period.

Having the first hot plate and the second hot plate at different fixed temperatures may be advantageous for heating asymmetrical food items. For example, if a food item has cheese on a first side adjacent a first hot plate and does not have cheese on a second side adjacent a second hot plate it may be advantageous that the first hot plate is at a different fixed temperature than the second hot plate such that the cheese is heated appropriately. This is true whether the food item is heated within packaging or not. It is to be understood that the skilled person would be able to readily determine the appropriate fixed temperature for any hot plate for any food item.

The vending machine of the method of the present invention may be any suitable vending machine that comprises a controller, a first hot plate, a second hot plate, and means for moving a food item in the manner required by the method.

The present invention also provides a vending machine comprising a first hot plate, a controller, and optionally a second hot plate, that is operated to heat food according to the method of the present invention.

Features and advantages of the present invention will be apparent from the preferred embodiment described below and shown. Unless otherwise indicated by the claims or by context any feature of the invention in the embodiment described below may be included in any other embodiment of the invention independently from the other features.

### Drawings

Figure 1 is a perspective view of a vending machine that may be operated according to a method according to the present invention;
Figure 2 is a perspective view of the vending machine of Figure 1 with external panelling removed; and
Figure 3 is a schematic of a method according to the present invention.

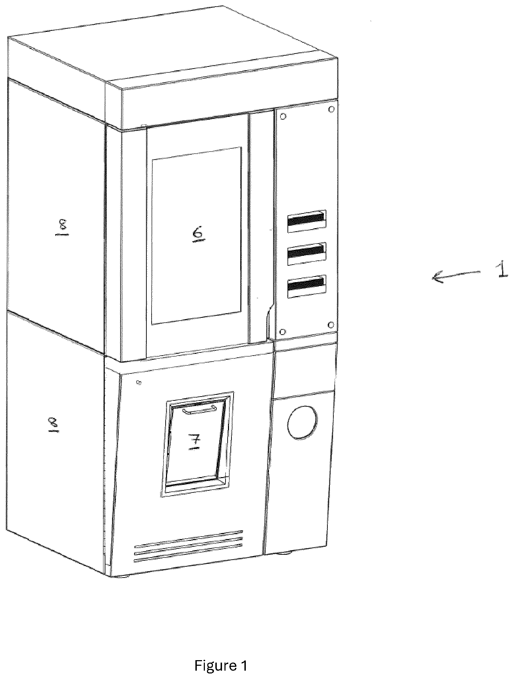

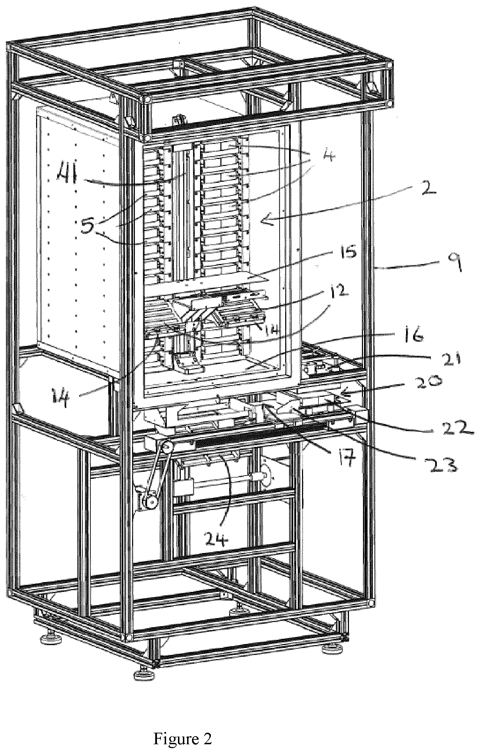

A hot food vending machine 1 suitable for use in the method of the present invention is shown in Figures 1 and 2.

The vending machine is formed of a metal frame 9 that contains the functional components of the vending machine 1. The food compartment 2 is a closed refrigerated compartment that acts to keep food packages 4 stored with the food compartment at a refrigerated temperature such that they can be stored for prolonged period of times. A front side of the food compartment 2 may be opened to allow an operator to stock the shelves 5 with food packages 4. The vending machine 1 is locked so that the food compartment 2 can only be accessed by an operator with a key. When in use the vending machine 1 is locked and the food compartment 2 cannot be accessed by a user.

Each shelf 4 has a horizontally movable pusher 10 that can be moved along an upper surface of a shelf from a rear end to a front end. An upper surface of each shelf 4 is formed of a low friction material that facilitates the sliding of food packages 5 along the shelf towards the front edge. A roller 11 is positioned at a front end of each shelf 4 to facilitate the pusher 10 acting to push a food package 5 off the front end of the shelf. As will be understood, if two or more food packages 5 are positioned on a shelf the pusher 10 will push a rearmost of the food packages 5, which will in turn push an adjacent food package. A pusher 10 may not directly push a food package 5, a pusher 10 can indirectly push a food package 5 off the front end of a shelf 4 indirectly through intermediate food packages 5. In the embodiment shown in the Figures each shelf 4 may have three or four food packages positioned thereon. Two parallel columns of shelves 4 are provided, each comprising fourteen shelves. The two columns of shelves 4 are separated by a central divider 41.

Two vertically movable dispensing platforms 12 are positioned within the food compartment 2 between the front edges of the shelves 4 and a front side of the food compartment. The dispensing platforms 12 are mounted to the central divider 41 of the food compartment 2 and are controllable to be vertically moved from an uppermost position at upper side of the food compartment to a lowermost position where it is moved out of a lower side of the food compartment. The dispensing platforms 12 are shown partway between these positions in the Figures 1. The dispensing platforms 12 each have a roller 13 positioned at a rear edge to facilitate a food package being pushed from a shelf 4 onto the dispensing platform. The dispensing platforms 12 are biased to be angled downwards from the rear edge to a front edge. An upper surface of each dispensing platform 12 is formed of a plurality of rollers to be low friction so that food packages 5 can slide along the upper surface easily. A barrier 14 is provided at a front edge of each dispensing platform 12 to retain food packages 5 on the platform. An upper barrier plate 15 is provided immediately above the dispensing platforms 12 and is moved vertically with the dispensing platforms. The barrier plate 15 extends substantially completely across a width of the food compartment 2 and from a front edge of the shelves 4 to a front side of the food compartment. The dispensing platforms 12 are mounted to be rotatable from the angled downwards orientation shown in the Figure to a substantially flat orientation. The dispensing platforms 12 are only movable in a vertical direction, they cannot be moved horizontally.

An openable closure 16 is formed at a lower side of the food compartment 2 in front of and immediately below the lowermost shelves 4. The openable closure 16 is a vertical movable door that is usually positioned to seal the food compartment 2. Immediately below the openable closure is a moving chamber 17 that extends laterally to a heating compartment 20 positioned adjacent the food compartment 2. The heating compartment 20 comprise a first (upper) heating plate 21 and a second (lower) heating plate 22. The first heating plate 21 is vertically movable. The second heating plate 22 is fixed in position. A horizontally movable moving carriage 23 is provided between in the moving chamber 17. The moving carriage 23 is movable from the heating compartment 20 to a position below the opposing lateral side of the food compartment 2. A piercing blade (not shown) is provided in the heating compartment 20 and is operable to pierce the packaging of a food package 5 positioned within the heating compartment. The moving carriage 23 consists of a frame that is slightly larger than a dispensing platform and can extend completely around sides of a dispensing platform and a food package 5 located thereon. A lower surface of the moving chamber 17 is a flat horizontal surface along which food packages 5 can be slid.

A dispensing slope 24 is provided immediately below the food compartment. The dispensing slope 24 is formed from a plurality of rollers such that a food package positioned on the dispensing slope 24 will slide downwards from towards its front edge. The dispensing slope 24 is angled downwards from a rear edge to a front edge. The front edge of the dispensing slope is positioned adjacent above a dispensing chamber formed on an inner side of the dispensing hatch 7. The dispensing slope 24 is passive and is not powered or operated in any way.

The vending machine 1 of the present invention is formed and intended for use with toastable sandwiches provided in heatable packaging. Each sandwich and its packaging will be a food package 5 according to the description above. Generally, the sandwiches will be substantially cuboid. Three or four of the food packages 5 will be positioned on each shelf 4. It is to be understood that the food packages on each shelf 4 will generally be identical. Different food packages 5 may be positioned on different shelves 4.

The vending machine 1 of the Figures is operated in the following manner.

A user will approach the vending machine 1, make a selection of their preferred sandwich from the digital screen, and make payment using either cash, a card, contactless payment, or any other suitable payment means. After payment has been made the vending machine 1 will be controlled to select, heat and dispense the appropriate food package 5.

First, the appropriate dispensing platform 12 is moved vertically to positioned adjacent a front edge of the shelf 4 on which the appropriate food package 5 is positioned, such that the rear edge of the dispensing platform 12 is positioned immediately adjacent a front edge of the shelf 4. Then the horizontally movable pusher 10 of the shelf 4 is operated to move forward to push a single food package 5 off the front edge of the shelf 4 onto the dispensing platform 12.

The dispensing platform 12 is then moved vertically downwards through the openable closure 16 and into the moving chamber 17. In this position the openable closure 16 will be moved downwards but the upper plate 15 will reseal the food compartment 2 and ensure that the remaining food packages within the food compartment 2 remain refrigerated. When the dispensing platform 12 reaches the moving chamber 17 it will contact an impingement surface of the moving chamber 17 which will act on the dispensing platform 12 to move it into a horizontal orientation, flat against the lower surface of the moving chamber. The moving carriage 23 will be positioned to extend around the appropriate dispensing platform 12 before the dispensing platform is lowered.

The moving carriage 23 is then operated to move horizontally to move the food package 5 horizontally along the dispensing platforms 12 and along to the heating compartment 20, such that it is on an upper surface of the second heating plate 22 and below the first heating plate 21. The food package 5 is then pierced. The dispensing platform 12 is then moved vertically upwards back into the food compartment 2 and the openable closure 16 is closed to close the food compartment.

When the food package 5 is positioned between the first and second heating plates 21, 22 the first heating plate 21 is moved downwards to sandwich the food package 5 between the heating plates. The heating plates 21, 22 are then controlled to heat the food package using a method according to the present invention. After heating the food package 5 the first heating plate 21 is moved upwards away from the food package 5.

The moving carriage 23 is then moved horizontally to move the food package 5 along the lower surface of the moving chamber until it is slid onto the dispensing slope 24. The food package 5 then slides down the dispensing slope 24 into the dispensing chamber. The user then opens the dispensing hatch 7 and can remove the heated food package 5 from the vending machine 1.

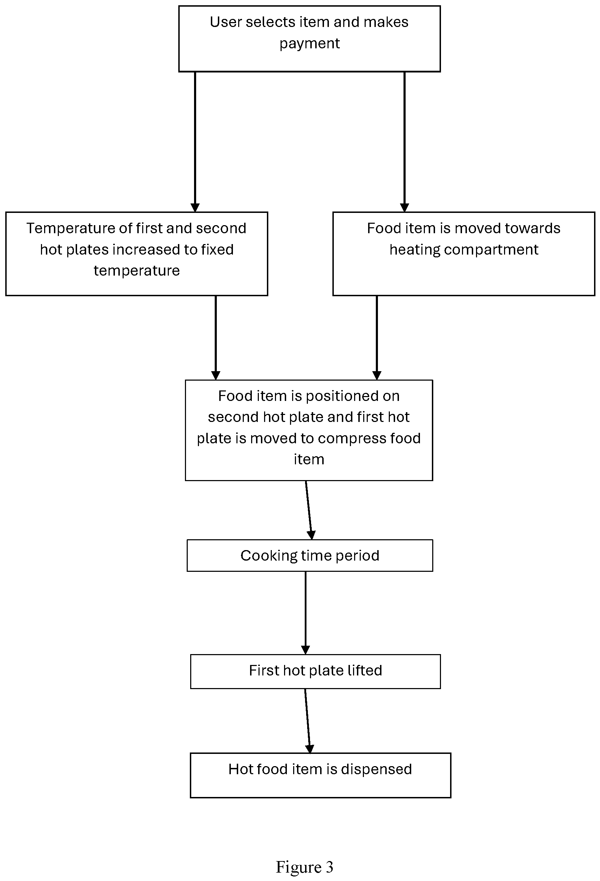

Figure 3 is a schematic that illustrates the method of the present invention.

As a first step, a user will select their desired food package 5 and make payment. After this has been completed a controller will operate to determine the temperature of the first and second hot plates 21, 22. The first and second hot plates 21, 22 are then controlled to be heated to a fixed cooking temperature, which may be the same temperature or a different temperature and they are then maintained at the fixed cooking temperature. At the same time, the food package 5 is moved towards the heating compartment 20 in the manner described above.

When the first and second hot plates 21, 22 are at temperature the packaging of the food item is pierced, the food package 5 is positioned on the second hot plate 22 and the first hot plate 21 is moved downwards to apply pressure to the food package 5.

The food package 5 is then heated for the cooking time period, which is determined based on the type of food within the food package 5 and on the basis of the fixed cooking temperature.

At the end of the cooking time period the first hot plate 21 is lifted away from the food package 5 and the food package is then moved out of the heating compartment 20 and dispensed from the vending machine 1 in the manner described above.

It will be understood that the cooking time period and fixed cooking temperature of the first and second hot plates 21, 22, will be determined by the type of food being heated and the vending machine will be controlled accordingly. Some types of food will require heating at a higher or lower temperature. Some types of food will require heating for longer or shorter time periods. The skilled person will be able to determine the suitable parameters for any particular type of food.

## Claims

1. A method of dispensing a heated food item (5) from a vending machine (1) having a first hot plate (21) and a second hot plate (22), the method comprising the steps of:
a user inputting a food selection into the vending machine (1);
the vending machine being operated to heat the food item (5) according to method wherein:
the food item (5) is positioned in contact with the first hot plate (21) and the second hot plate (22), wherein the second hot plate (22) opposes the first hot plate (21) and the food item (5) is positioned therebetween;
determining a first initial temperature of the first hot plate (21) and a second initial temperature of the second hot plate (22);
controlling the temperature of the first hot plate (21) to move from the first initial temperature to a first fixed cooking temperature;
controlling the temperature of the second hot plate (22) to move from the second initial temperature to a second fixed cooking temperature;
maintaining the temperature of the first hot plate (21) at the first fixed cooking temperature for a cooking time period;
maintaining the temperature of the second hot plate (22) at the second fixed cooking temperature for the cooking time period;
removing the food item (5) from contact with the first hot plate (21) and the second hot plate (22) at the expiry of the cooking time period; wherein
the first hot plate (21) is moved to the first fixed cooking temperature before the food item (5) is positioned in contact with the first hot plate (21) and the second hot plate (22) is moved to the second fixed cooking temperature before the food item (5) is positioned in contact with the second hot plate (22); and
after heating, the vending machine (1) being operated to dispense the heated food item (5) from the vending machine (1).

2. A method of dispensing a heated food item (5) according to claim 1, wherein the cooking time period is determined based on the type of food item (5).

3. A method of dispensing a heated food item (5) according to any preceding claim, wherein the food item (5) is contained within packaging and the packaging is in direct contact with the first hot plate (21) and the second hot plate (22) during heating.

4. A method of dispensing a heated food item (5) according to claim 3, wherein the packaging is pierced before the food item (5) is positioned in contact with the first hot (21) plate and the second hot plate (22).

5. A method of dispensing a heated food item (5) according to any preceding claim, wherein pressure is applied to the food item (5) during heating by the first hot plate (21).

6. A hot food vending machine (1) comprising a first hot plate (21) and a second hot plate (22), wherein the vending machine (1) is operated to heat food according to the method of any of claims 1 to 5.
